# EUROPÄISCHE PATENTSCHRIFT

(11) **EP 4 675 214 B1**
(45) Veröffentlichungstag und Bekanntmachung des Hinweises auf die Patenterteilung: **13.05.2026**
(21) Anmeldenummer: 24186313.3
(22) Anmeldetag: 03.07.2024
(51) Int. Cl.: F28F 3/12, F28F 3/02, H01M 10/6556

(54) **TEMPERIERPLATTE SOWIE EINE BATTERIESPEICHERANORDNUNG MIT EINER SOLCHEN TEMPERIERPLATTE**
TEMPERATURE-CONTROL PLATE AND BATTERY STORAGE ARRANGEMENT HAVING SUCH A TEMPERATURE-CONTROL PLATE
PLAQUE DE RÉGULATION DE TEMPÉRATURE ET SYSTÈME DE STOCKAGE DE BATTERIE DOTÉ D'UNE TELLE PLAQUE DE RÉGULATION DE TEMPÉRATURE

(43) Veröffentlichungstag der Anmeldung: 07.01.2026
(73) Patentinhaber: Benteler Automobiltechnik GmbH, 33102 Paderborn (DE)
(72) Erfinder: Grußmann, Elmar, 33184 Altenbeken (DE); Landermann, Lars, 32052 Herford (DE)
(74) Vertreter: Griepenstroh, Jörg

(56) Entgegenhaltungen:
- FR-A1- 3 100 608
- IT-A1- 202000 031 469
- US-A1- 2013 171 491
- US-A1- 2021 280 927
- US-A1- 2023 272 983
- US-A1- 2024 213 575

## Beschreibung

Die Erfindung betrifft eine Temperierplatte mit den Merkmalen des Patentanspruchs 1 sowie eine Batteriespeicheranordnung gemäß Anspruch 14. Eine Temperierplatte mit den Merkmalen im Oberbegriff des Patentanspruchs 1 ist aus der FR 3 100 608 A1 bekannt.

Die Leistung und Lebensdauer einer Batterie hängt von der Betriebstemperatur ab. Zur Aufrechterhaltung der optimalen Betriebstemperatur weisen insbesondere Elektrofahrzeuge Batterietemperiersysteme auf. Hierbei handelt es sich in der Regel um Kühlsysteme. Batteriesysteme werden aber auch vorgewärmt, um den Innenwiderstand vor einem Ladevorgang zu reduzieren.

Für die Batterietemperierung eigenen sich insbesondere Temperierplatten mit geringer Bauhöhe. Die Temperierplatten werden in den Batteriekasten eingelegt und kontaktieren die Batterien von unten.

Die US 2013/171491 A1 offenbart eine Anordnung um Wärme von Batteriezellen abzuführen. Es kommen in vertikaler Anordnung Temperierplatten im Wechsel mit Batteriezellen zum Einsatz. Die Temperierplatten haben einen mehrschichtigen Aufbau mit einer Mittelplatte und beidseitigen Deckplatten.

Beidseitig der Mittelplatte sind Kanäle angeordnet, die aufgrund der vertikalen Anordnung der Temperierplatten von unten nach oben volllaufen sollen. An einem Ende der senkrecht stehenden Temperierplatten gibt es je eine Kühlmittelzufuhr und am anderen Ende je eine Kühlmittelabfuhr.

Temperierplatten mit dreilagigem Aufbau sind auch aus der IT 2020 0003 1469 A1 bekannt. Ein Zulauf und ein Rücklauf befinden sich an derselben Randseite einer Platte. Obere und untere Temperierkanäle werden zur Temperiermittelumlenkung über eine Durchgangsöffnung miteinander verbunden, bei welcher es sich um eine einzige schlitzförmige Öffnung für alle Temperierkanäle gleichzeitig handelt.

Die US 2023/272983 A1 offenbart Kühlplatten für Batterieanordnungen, wobei die Kühlplatten einen dreischichtigen Aufbau mit zwei Ebenen von Kühlkanälen besitzen. Das Kühlmittel wird auf der einen Seite der Platte zugeführt und auf der anderen Seite wieder abgeleitet.

Die US 2024/213575 A1 beschreibt eine weitere Bauform einer Kühlplatte zur Kühlung von Batteriegehäusen ebenso wie die US 2021/028927 A1.

Der Erfindung liegt die Aufgabe zugrunde, eine Temperierplatte und eine Batteriespeicheranordnung mit einer Temperierplatte aufzuzeigen, die geeignet ist, an gegenüberliegenden Seiten der Temperierplatte angeordnete Batterien zu temperieren.

Diese Aufgabe ist bei einer Temperierplatte mit den Merkmalen des Patentanspruches 1 gelöst. Eine Batteriespeicheranordnung mit einer solchen Temperierplatte ist Gegenstand des Patentanspruchs 14.

Die Unteransprüche betreffen vorteilhafte Weiterbildungen der Erfindung.

Die erfindungsgemäße Temperierplatte besitzt eine Tragplatte zwischen einer glatten oberen Abdeckplatte und einer glatten unteren Abdeckplatte. Die Tragplatte ist mit den beiden Abdeckplatten verbunden. Die obere Abdeckplatte dient für den Kontakt mit einer angrenzenden oberen Zellebene, die aus einer Vielzahl von Batteriezellen gebildet ist und die untere glatte Abdeckplatte dient zum Kontakt mit einer angrenzenden unteren Zellebene, die aus einer Vielzahl von Batteriezellen gebildet ist. Auf den glatten oberen und unteren Seiten der Abdeckplatten kann eine möglichst dünne Wärmeleitfolie oder ein Wärmeleitmittel angeordnet sein. Es soll ein möglichst flächiger und gut wärmeleitender Kontakt zu den angrenzenden Batterien hergestellt werden, die von der Temperierplatte entweder gekühlt oder erwärmt werden sollen. Die Abdeckplatten sind glatt in dem Sinne, dass 100% der Kontaktfläche mit den Zellebenen als Temperierkontakte ausgebildet sind. Die Kontaktflächen sind insbesondere frei von Sicken, Vertiefungen oder Öffnungen.

Die Tragplatte ist mit einer Temperierkanalprofilierung versehen zur Ausbildung von Temperierkanälen zwischen der Tragplatte und den angrenzenden Abdeckplatten. Dabei ist die Tragplatte vorzugsweise mindestens 50 % dicker als die Abdeckplatten. Die Tragplatte ist das ganz überwiegend tragende Bauteil der Temperierplatte.

Durch die Temperierkanalprofilierung werden oberseitig und unterseitig der Tragplatte Vertiefungen gebildet, welche von oben bzw. von unten von den Abdeckplatten bedeckt sind und dadurch Temperierkanäle bilden. Die Abdeckplatten sind mit der Tragplatte stoffschlüssig verbunden, beispielsweise verlötet oder verschweißt. Die äußeren Abdeckplatten sind möglichst dünnwandig, während die Tragplatte vorzugsweise dickwandiger und damit belastbarer ist. Die Tragplatte bildet in diesem Fall die tragende Struktur der Temperierplatte. Die Tragplatte ist aufgrund der ausgebildeten Profilierung zudem besonders biegesteif. Da die Tragplatte zudem mit den Abdeckplatten großflächig verbunden ist, wird ein Hohlprofilkörper mit einer Vielzahl von Kammern und Verbindungsstellen geschaffen. Die Sandwichbauweise der Temperierplatte mit der hoch belastbaren Tragplatte ermöglicht eine sehr flache Bauweise und eine hohe Belastbarkeit von beiden Seiten.

Die Temperierplatte besitzt obere Temperierkanäle, die zwischen der oberen Abdeckplatte und der Tragplatte angeordnet sind und untere Temperierkanäle zwischen der unteren Abdeckplatte und der Tragplatte. Die Temperierkanäle sind im Querschnitt insbesondere trapezförmig ausgebildet. Die Temperierkanalprofilierung ist insbesondere eine Aneinanderreihung von zueinander parallel verlaufenden trapezförmigen oder rinnenförmigen Prägungen in entgegengesetzte Richtungen der Tragplatte. D.h. die Tragplatte wird durch die Temperierkanalprofilierung in entgegengesetzte Richtung ausgestellt, so dass die Temperierkanalprofilierung sowohl über die Unterseite der Tragplatte und insbesondere auch in gleichem Umfange über die Oberseite der Tragplatte vorsteht, verglichen mit dem Ausgangszustand der unverformten, glatten Tragplatte. Benachbarte Temperierkanäle können im Querschnitt voneinander abweichen, insbesondere ist der Querschnitt der Temperierkanäle, über die das Temperiermittel einströmt, aus thermodynamischen Gründen kleiner als der Querschnitt der Temperierkanäle, über die das Temperiermittel abströmt. Die Temperierkanalprofilierung ist durch Tiefziehen kostengünstig herstellbar. Die Trapezform bewirkt eine Versteifung und stellt im Vergleich zur Wellenform eine besonders hohe Belastbarkeit bzw. zulässige Flächenpressung auf die Temperierplatte sicher.

Die oberen und unteren Temperierkanäle sind über durchströmbare Durchgangsöffnungen fluidleitend miteinander verbunden. Die Durchgangsöffnungen dienen zur Temperiermittelumlenkung. Bevorzugt strömt das Temperiermittel zunächst in die unteren Temperierkanäle ein, bis es zu den Durchgangsöffnungen gelangt, durchströmt dann die Durchgangsöffnungen nach oben in Richtung zu den oberen Temperierkanälen und strömt im weiteren Verlauf in Gegenrichtung zur Strömung in den unteren Temperierkanälen wieder zurück.

In jedem unteren Temperierkanal befindet sich mindestens eine Durchgangsöffnung. Mehrere Durchgangsöffnungen sind ebenso möglich. Die Durchgangsöffnungen können für eine gleichmäßige Temperierung unterschiedlich groß sein. Die Durchgangsöffnungen befinden sich zur Umlenkung insbesondere möglichst weit entfernt von Temperiermittelanschlüssen, über welche das Temperiermittel der Tragplatte zugeleitet wird und über welche das Temperiermittel wieder abgeleitet wird.

Vorzugsweise gibt es nur einen einzigen und insbesondere zentral angeordneten Temperiermittelanschluss für den Zulauf und Rücklauf, so dass das Temperiermittel bei mehreren parallelen Temperierkanälen unterschiedlich lange Wege bis zur Durchgangsöffnung zurücklegt. Durchgangsöffnungen mit voneinander abweichenden Durchmessern sind vorgesehen, um voneinander abweichende Strömungsgeschwindigkeiten des Temperiermittels einzustellen. Wenn eine intensivere Kühlung/Erwärmung gefordert ist, muss die Strömungsgeschwindigkeit hoch sein. In dem Fall sind die Durchgangsöffnungen größer. Auch wenn die von dem Temperiermittel zurückzulegenden Wege länger sind als andere Wege, so dass über die Wegstrecke eine größere Wärmemenge übertragen wird, kann die Durchgangsöffnung größer sein. Umgekehrt ist die Durchgangsöffnung kleiner, wenn die Wege kürzer sind. Die Temperaturdifferenzen innerhalb der Temperierplatte werden durch unterschiedlich große Durchgangsöffnungen kleiner und die Kühlung bzw. das Erwärmen der Batteriezellen erfolgt gleichmäßiger. Die Durchgangsöffnungen können auch entsprechend eines potentiellen thermischen Hot-Spot-Aufkommens der Zellebenen bereichsweise größer sein.

Die Abdeckplatten weisen angrenzend an die oberen und unteren Temperierkanäle jeweils einen glatten Bereich auf und an den glatten Bereichen jeweils einen randseitigen Kragen zur Verbindung mit der Tragplatte. Der Kragen ist gegenüber den glatten Bereichen abgewinkelt und kann zusätzlich einen nach außen weisenden Flansch aufweisen, über den der Kragen mit der Abdeckplatte verbunden werden kann. Die Kragen und die glatten Bereiche der beiden Abdeckplatten sind hinsichtlich der Formgebung bevorzugt identisch ausgebildet. Es wird aus fertigungstechnischer Sicht angestrebt, für die beiden Abdeckplatten identische Umformwerkzeuge zu verwenden. Der Kragen wird insbesondere durch Tiefziehen hergestellt. Erst nach der Umformung, d.h. nach dem Tiefziehen, erfolgt ein Randbeschnitt z.B. durch Stanzen. Gleichzeitig mit dem Stanzen oder dem Randbeschnitt können auch Öffnungen für Temperiermittelanschlüsse in wenigstens einer der Abdeckplatten hergestellt werden. Die Abdeckplatten sind daher ganz überwiegend Gleichteile, die kostengünstig hergestellt werden können.

Die Temperierplatte besitzt vorzugsweise gegenüberliegende erste und zweite Randseiten, an denen jeweils eine Verstärkungsleiste angeordnet ist. Die Verstärkungsleiste dient zur Verstärkung der Temperierplatte, zur Handhabung des ganzen Pakets und zur Befestigung der Temperierplatte mit den daran angeordneten Zellebenen an oder in einem Batteriegehäuse. Das Batteriegehäuse besitzt geeignete Verbindungsstellen für die Verstärkungsleisten. Die Verstärkungsleiste steht vorzugsweise gegenüber den Zellebenen vor. Die Temperierplatte ist daher insbesondere breiter als die an ihr angeordneten Zellebenen. Dadurch kann die Verstärkungsleiste seitlich gegenüber den Zellebenen vorstehen.

Die Verstärkungsleiste kann allerdings nicht nur zur äußeren Befestigung der Temperierplatte an einem Batteriegehäuse dienen, sondern insbesondere den Randbereich der Temperierplatte verstärken. Vorzugsweise ist die Verstärkungsleiste eine Klammer, welche die obere und die untere Abdeckplatte übergreift. Die Verstärkungsleiste übergreift insbesondere einen randseitigen Temperierkanal. Das hat den Vorteil, dass die hohe Biegesteifigkeit der Sandwichbauweise der Temperierplatte bis in die Verstärkungsleiste fortgesetzt wird, so dass auf die Verstärkungsleiste einwirkende Kräfte über die Sandwichstruktur sicher und biegespannungsarm übertragen werden können.

Alternativ zu einer Verstärkungsleiste besitzt die Tragplatte auf diametralen und ersten und zweiten Randseiten der Temperierplatte einen gegenüber den Abdeckpatten vorstehenden Befestigungsrand. Die gegenüber den Abdeckplatten vorstehenden ersten und zweiten Randseiten sind diametral angeordnet. Insbesondere sind die Randseiten eben, so dass die Tragplatte als flächiges Auflager dienen kann. Die Randseiten dienen auch zum Handling der Zellebenen. Der seitlich vorstehende Befestigungsrand kann zusätzlich profiliert sein, um die Biegesteifigkeit des Befestigungsrandes zu erhöhen. Der Befestigungsrand kann zudem Rastnasen aufweisen, um die Temperierplatte mit den daran befestigten Batterien zu fixieren. Der Befestigungsrand kann auch Öffnungen, Durchbrüche oder Einkerbungen aufweisen, die dazu benutzt werden können, die Temperierplatte zusammen mit den darin angeordneten Batterien zu befestigen.

Die erfindungsgemäße Temperierplatte zeichnet sich insbesondere dadurch aus, dass sie zwei gegenüberliegende glatte Seiten hat. Die außenliegenden Abdeckplatten sind in dem zum Temperieren vorgesehenen Bereich nicht profiliert. Die Abdeckplatten können außerhalb des zu temperierenden Bereichs eine Profilierung aufweisen, im Sinne eines umlaufenden Randes, der zur Tragplatte weist und dazu dient, die Abdeckplatte gewissermaßen über die Temperierkanalprofilierung zu stülpen und eine Anlagefläche schafft, um die Abdeckplatten mit der Oberseite bzw. mit der Unterseite der Tragplatte zu verbinden. Die Abdeckplatten haben je nach Orientierung die Form einer sehr flachen Haube oder sehr flachen Wanne.

In vorteilhafter Weiterbildung der Erfindung besitzt die Tragplatte eine Wanddicke, die mindestens 50, vorzugsweise 75 bis 150 %, größer ist als die Wanddicke jeder einzelnen der Abdeckplatten. Insbesondere ist die Tragplatte doppelt so dick wie die Abdeckplatte. Wenn ein Befestigungsrand vorgesehen ist, kann die Wanddicke der Tragplatte geringer ausfallen, weil die Kraftübertragung auf die Verstärkungsleiste vorzugsweise über die Abdeckplatten erfolgt. Die Verstärkungsleiste, die als Klammer insbesondere einen im Wesentlichen U-förmigen Querschnitt hat, kann einen zur Temperierplatte weisenden Schenkel haben, der in der Einbaulage sogar zwischen die Zellebenen greift, so dass der eine Schenkel oder, so dass sogar beide Schenkel teilweise zwischen der Abdeckplatte und der Zellebene angeordnet sind. Das hat den Vorteil, dass die Kraftübertragung von den Zellebenen in die Verstärkungsleiste direkter erfolgt und die Struktur der Temperierplatte weniger belastet wird. Dadurch kann die Temperierplatte leichter gebaut werden. Die Verstärkungsleiste ist insbesondere stoffschlüssig mit den anderen Bauteilen der Temperierplatte verbunden.

Die Tragplatte ist insbesondere rechteckig. An den ersten und zweiten Rändern befinden sich die Befestigungsränder der zentralen Tragplatte oder die Verstärkungsleisten. Kombinationen aus Befestigungsrändern und Verstärkungsleisten sind im Rahmen der Erfindung möglich.

An einer weiteren Randseite, der dritten Randseite, besitzt die Tragplatte bevorzugt wenigstens einen Vorsprung für wenigstens einen Temperiermittelanschluss. Wenn mehrere der Zellebenen übereinander oder hintereinander angeordnet werden sollen, können die Temperiermittelanschlüsse an gegenüberliegenden Randseiten angeordnet sein. Vorzugsweise sind beide Temperiermittelanschlüsse, d.h. für den Zulauf und den Ablauf, an derselben Randseite angeordnet.

Die Temperiermittelanschlüsse sind insbesondere auch an derselben Abdeckplatte, insbesondere an der oberen Abdeckplatte angeordnet. Diese Bauweise ist herstellungstechnisch günstig, da Anschlussleitungen für den Vor-und Rücklauf von einer Seite montiert werden können. Der wenigstens eine Vorsprung ist vorzugsweise in einem Winkel in einem Bereich von 5 bis 45° zur Tragplatte geneigt. Dadurch wird eine Einströmrampe gebildet. Zudem weisen die Öffnungen für die Temperiermittelanschlüsse leicht von der Temperierplatte weg, was das Anschließen von Zulauf- und Rücklaufleitungen vereinfacht. Die Strömungsverluste des flüssigen Temperiermittels werden reduziert.

Wenn der Zulauf des Temperiermittels an der dritten Randseite und der Rücklauf ebenfalls an der dritten Randseite erfolgt, sollten die Durchgangsöffnungen vorzugsweise in der Nähe der gegenüber liegenden vierten Randseite angeordnet sein. Das bedeutet, dass die Temperierkanäle bevorzugt so orientiert sind, dass das Temperiermittel zunächst von der dritten zur vierten Randseite strömt, dort durch die Durchgangsöffnungen umgelenkt wird und wieder zur dritten Randseite zurückströmt.

Die Temperiermittelanschlüsse sind beide bevorzugt in einem mittleren Bereich der dritten Randseite angeordnet. Ein Kühlmittel strömt dann bevorzugt in diejenigen Kanäle, die unmittelbar zum mittleren Bereich der gegenüberliegenden vierten Randseite führen. Um eine übermäßige Kühlung durch hohe Kühlmittelgeschwindigkeiten im mittleren Bereich zu vermeiden, sind die Durchgangsöffnungen mit dem kleinsten Durchmesser im mittleren Bereich der vierten Randseite angeordnet und die Durchgangsöffnungen mit dem größeren Durchmesser benachbart zu den ersten und zweiten Randbereichen angeordnet. Erfindungsgemäß können benachbarte Durchgangsöffnungen stets unterschiedliche Durchmesser haben, so dass sich in benachbarten Kühlmittelkanälen stets unterschiedliche Strömungsgeschwindigkeiten einstellen und der Wärmeübergang über die gesamte Fläche betrachtet gleichmäßiger wird.

In einer Weiterbildung der Erfindung ist vorgesehen, dass beide Temperiermittelanschlüsse, nämlich derjenige für den Zulauf und derjenige für den Ablauf, nahe nebeneinander angeordnet sind, um die Montage der Temperierplatte zu vereinfachen. Bevorzugt befinden sich beide Temperiermittelanschlüsse an der oberen Abdeckplatte. Die Tragplatte besitzt eine Durchströmöffnung, die mit einem Zuströmkanal zu den unteren Temperierkanälen verbunden ist. Das Temperiermittel soll von dem Temperiermittelanschluss, der als Zulauf dient, durch die Durchströmöffnung der Tragplatte geleitet werden, so dass es sich auf der Unterseite der Tragplatte befindet und von dem Zuströmkanal auf alle parallel zueinander verlaufenden Temperierkanäle verteilt wird, anschließend den Durchgangsöffnungen zuströmt, von dort in die oberen Temperierkanäle auf der Oberseite der Tragplatte gelangt und schließlich wieder zu dem Temperiermittelanschluss für den Ablauf in der oberen Abdeckplatte zuströmt. Die obere Abdeckplatte besitzt einen Abströmkanal, der an die oberen Temperierkanäle angeschlossen ist. Für einen hinreichend großen Querschnitt im Bereich der zentralen Temperiermittelzufuhr und der Temperiermittelabfuhr kann die Tragplatte im Bereich des Zuströmkanals und im Bereich des Abströmkanals den jeweiligen Strömungsquerschnitt des Zuströmkanals und/oder des Abströmkanals vergrößernde Sicken aufweisen. Die Sicken sind insbesondere in gegengesetzte Richtungen ausgestellt. Eine der Sicken weist zudem die Durchströmöffnung für den Zulauf des Temperiermittels auf. Die Tragplatte bildet für die Temperiermittelanschlüsse die tragende Mittellage in Form eines Vorsprungs. Der Vorsprung kann gegenüber einer Mittelebene der Temperierplatte im Temperierbereich zwischen den Zellebenen um einen spitzen Winkel (5 bis 45°) abgekröpft sein und dadurch eine Einströmrampe bilden. Das Temperiermittel muss weniger stark umgelenkt werden. Die Druckverluste sind geringer. Die obere Abdeckplatte und die untere Abdeckplatte sind in diesem Fall ebenfalls abgekröpft.

Die Temperierkanäle, die im Querschnitt bevorzugt trapezförmig sind, besitzen jeweils zwischen der oberen Abdeckplatte und der unteren Abdeckplatte verlaufende Wände. Sie werden von der Tragplatte gebildet. Die Wände eines Temperierkanals schließen einen Innenwinkel mit derjenigen Abdeckplatte ein, die den Temperierkanal bedeckt. Je steiler die Wände sind, d.h. je größer der Innenwinkel ist, desto schwieriger ist die Herstellung der Durchströmöffnungen. Daher sind die Durchströmöffnungen in einem Wandbereich angeordnet, in welchem der Innenwinkel lokal reduziert ist. Dieser Wandbereich ist mithin lokal abgeflacht und insbesondere verprägt, so dass eine Durchströmöffnung insbesondere durch Stanzen hergestellt werden kann. Der abgeflachte Wandbereich, der nur eine geringe Neigung zur Plattenebene der Tragplatte aufweisen soll, ist nur dort zweckmäßig, wo die Lochung durchgeführt werden soll.

Die erfindungsgemäße Temperierplatte ist kostengünstig in der Herstellung, insbesondere wenn die Temperierkanalprofilierung durch Tiefziehen des Ausgangswerkstoffes für die Tragplatte hergestellt wird. Die Profilierung kann entsprechend der Temperaturanforderungen gestaltet werden, d.h. es sind größere und kleinere Temperierkanäle möglich, je nachdem, welche Strömungsgeschwindigkeiten in den jeweiligen Bereichen der Temperierplatte gewünscht werden. Die Tragplatte der Temperierplatte hat insbesondere die Tragfunktion im Hinblick auf obere und untere Zellebenen, die mit der Temperierplatte verbunden sein können. Die Einströmrampe reduziert Strömungsverluste.

Die Erfindung betrifft auch eine Batteriespeicheranordnung für mobile oder stationäre Anwendungen, wobei die Batteriespeicheranordnung eine aus einer Vielzahl von Batteriezellen gebildete obere Zellebene und einer aus einer Vielzahl von Batteriezellen gebildete untere Zellebene aufweist, wobei zwischen den Zellebenen die vorstehend beschrieben Temperierplatte zur Temperierung angeordnet ist.

Die Batteriespeicheranordnung besitzt insbesondere ein Batteriegehäuse, wobei die oben beschriebene Temperierplatte die gegenüberliegenden ersten und zweiten Randseiten aufweist, an denen jeweils eine Verstärkungsleiste angeordnet ist und/oder wobei die oben beschriebene Tragplatte einen Befestigungsrand aufweist. Die besagte Temperierplatte ist mittels der Verstärkungsleisten und/oder mittels der Befestigungsränder an oder im dem Batteriegehäuse befestigt ist.

Die Erfindung wird nachfolgend anhand von in den Zeichnungen dargestellten Ausführungsbeispielen näher erläutert. Es zeigen
- Fig 1: eine perspektivische Darstellung einer Temperierplatte einer ersten Ausführungsform mit daran angeordneten Zellebenen;
- Figur 2: die Temperierplatte der Figur 2 ohne Zellebenen in einer perspektivischen Ansicht;
- Figur 3: einen Querschnitt entlang der Linie III-III der Figur 1 durch die Temperierplatte mit den Zellebenen;
- Figur 4: eine Explosionsdarstellung der Temperierplatte der Figur 2;
- Figur 5: eine Veranschaulichung des Strömungswege eines einströmenden Temperiermittels innerhalb der Temperierplatte;
- Figur 6: eine Veranschaulichung des Strömungswege eines ausströmenden Temperiermittels innerhalb der Temperierplatte;
- Figur 7: eine perspektivische Ansicht auf Durchgangsöffnungen in der Tragplatte;
- Figur 8: ein Detail der oberen Abdeckplatte im Bereich des Temperiermittelanschlusses;
- Figur 9: ein Detail der Tragplatte im Bereich des Temperiermittelanschlusses;
- Figur 10: ein Detail der unteren Abdeckplatte im Bereich des TemperiermittelanSchlusses;
- Figur 11: eine perspektivische Darstellung einer Temperierplatte in einer zweiten Ausführungsform mit daran angeordneten Zellebenen;
- Figur 12: einen Querschnitt entlang der Linie XII-XII der Figur 11 durch die Temperierplatte mit den Zellebenen;
- Figur 13: ein Detail der Figur 12;
- Figur 14: eine Explosionsdarstellung der Temperierplatte der Figur 11 und
- Figur 15: eine perspektivische Ansicht auf Durchgangsöffnungen in der Tragplatte.

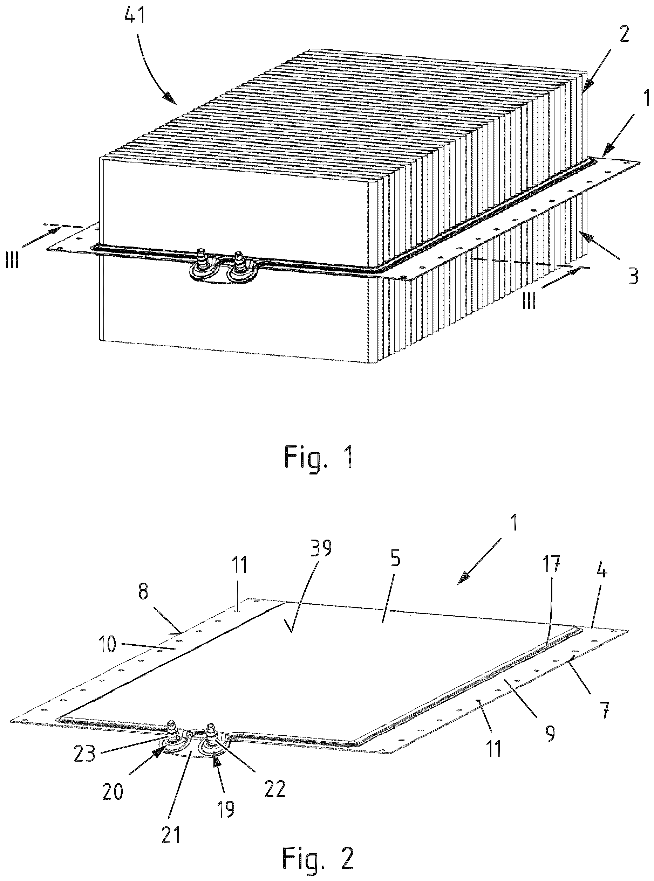

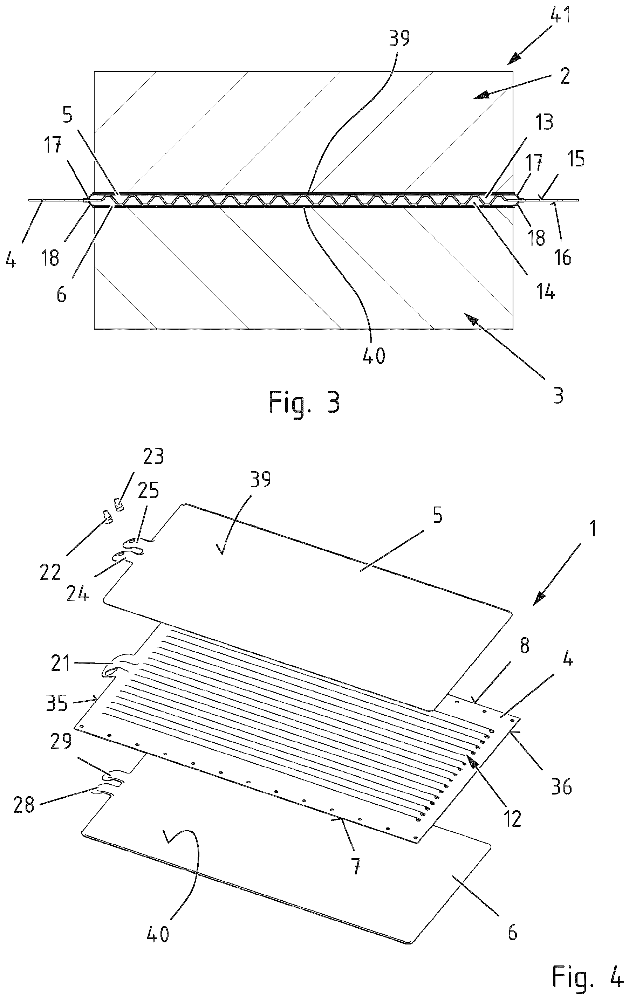

Die Figur 1 zeigt in perspektivischer Ansicht ein erstes Ausführungsbeispiel einer Temperierplatte 1, die zwischen einer oberen Zellebene 2 und einer unteren Zellebene 3 angeordnet ist. Die beiden Zellebenen 2, 3 zusammen mit der Temperierplatte 1 bilden eine Batteriespeicheranordnung 41. Jede Zellebene 2, 3 ist aus einer Vielzahl von Batteriezellen gebildet. Die Figur 2 zeigt die Temperierplatte 1 ohne die beiden Zellebenen 2, 3. Ein Schnitt entlang der Linie III-III der Figur 1 ist in Figur 3 dargestellt. Die Figur 4 zeigt eine Explosionszeichnung.

Die rechteckige Temperierplatte 1 besitzt einen 3-lagigen Aufbau umfassend eine zentrale Tragplatte 4, die von einer glatten oberen Abdeckplatte 5 und einer ebenso glatten unteren Abdeckplatte 6 belegt ist. Die glatten Bereiche 39, 40 sind für den temperierenden Kontakt mit den Zellebenen 2, 3 vorgesehen. Die beiden Abdeckplatten 5, 6 sind ebenfalls rechteckig, allerdings etwas kleiner als die Tragplatte 4. Die Temperierplatte 1 weist diametral angeordnete erste und zweite Randseiten 7, 8 auf, wobei die Tragplatte 4 seitlich gegenüber den schmaleren Abdeckplatten 5, 6 vorstehende Befestigungsränder 9, 10 aufweist. Die beiden Befestigungsränder 9, 10 weisen mehrere Öffnungen 11 auf, über welche die Temperierplatte 1 zusammen mit den Zellebenen 2, 3 fixierbar ist. Es ist möglich, die Temperierplatte 1 mit den Zellebenen 2, 3 mit Hilfe der Befestigungsränder 9, 10 an oder in einem Batteriegehäuse zu fixieren. Der Tragplatte 4 kommt hierbei die tragende Funktion für die gesamte Anordnung bestehend aus zwei Zellebenen 2, 3 und der zentralen Temperierplatte 1 zu.

Hervorzuheben ist, dass die obere Abdeckplatte 5 glatt ist ebenso wie die untere Abdeckplatte 6. Die glatten oberen und unteren Seiten der Temperierplatte 1 werden mit einem Wärmeübertrager, beispielsweise einer dünnen Wärmeleitfolie, belegt, um eine Verbindung zu einer Batterieauflagefläche zu schaffen. Das ist im Fall der oberen Zellebene 2 die Unterseite der Zellebene 2 und bei der in der Bildebene der Figur 3 unteren Zellebene 3 die Oberseite der Zellebene 3. Die Abdeckplatten 5, 6 haben die Funktion, die Zellebenen 2, 3 mindestens thermisch mit der Temperierplatte 1 zu verbinden, allerdings erfüllt die zentrale Tragplatte 4 maßgeblich die Tragfunktion der gesamten Temperierplatte 1. Eine Besonderheit der Erfindung ist, dass die Tragplatte 4 zugleich eine Temperierkanalprofilierung 12 aufweist. Anhand der Schnittdarstellung der Figur 3 wird deutlich, dass die Temperierkanalprofilierung 12 im Querschnitt trapezförmig ausgebildet ist. Alle dadurch ausgebildeten einzelnen Temperierkanäle 13, 14 haben den gleichen Querschnitt. Die oberen und unteren Temperierkanäle 13, 14 entstehen dadurch, dass die Temperierkanalprofilierung 12 der zentralen Tragplatte 4 von den oberen und unteren Abdeckplatten 5, 6 bedeckt wird. Dadurch haben die einzelnen Temperierkanäle 13, 14 jeweils einen trapezförmigen Querschnitt. Die Figur 3 zeigt, dass die Temperierkanalprofilierung 12 zu beiden Seiten der Tragplatte 4 ausgestellt ist. Die Temperierkanalprofilierung 12 überragt eine Oberseite 15 und eine Unterseite 16 der Tragplatte 4 um ein Mehrfaches der Dicke der Tragplatte 4. Die Wanddicke der Abdeckplatten 5, 6 ist bei diesem Ausführungsbeispiel nur halb so groß wie die Wanddicke der Tragplatte 4.

Anhand der Schnittdarstellung der Figur 3 ist zu erkennen, dass Kragen 17, 18 der im Übrigen glatten Abdeckplatten 5, 6 gegenüber den Zellebenen 2, 3 nach außen vorstehen und zweifach abgekröpft sind. Über die zweifach abgekröpften Kragen 17, 18 sind die beiden Abdeckplatten 5, 6 mit der zentralen Tragplatte 4 stoffschlüssig verbunden, insbesondere verlötet oder verschweißt.

Das Trapezprofil der Tragplatte 4 besitzt zwischen einander benachbarten oberseitigen bzw. unterseitigen Temperierkanälen 13, 14 einen Steg, der parallel zur glatten oberen Abdeckplatte 5 bzw. parallel zur glatten unteren Abdeckplatte 6 verläuft. Die Tragplatte 4 ist über die Stege mit den beiden Abdeckplatten 5, 6 verbunden. Die Sandwich-Bauweise dieses Hohlprofilkörpers besitzt eine hohe Tragfähigkeit. Die Tragplatte 4 kann beispielsweise Zellebenen 2, 3 tragen, die je Seite 100 kg oder mehr wiegen können. Gleichzeitig ist die Temperierplatte 1 sehr platzsparend und kostengünstig in der Fertigung.

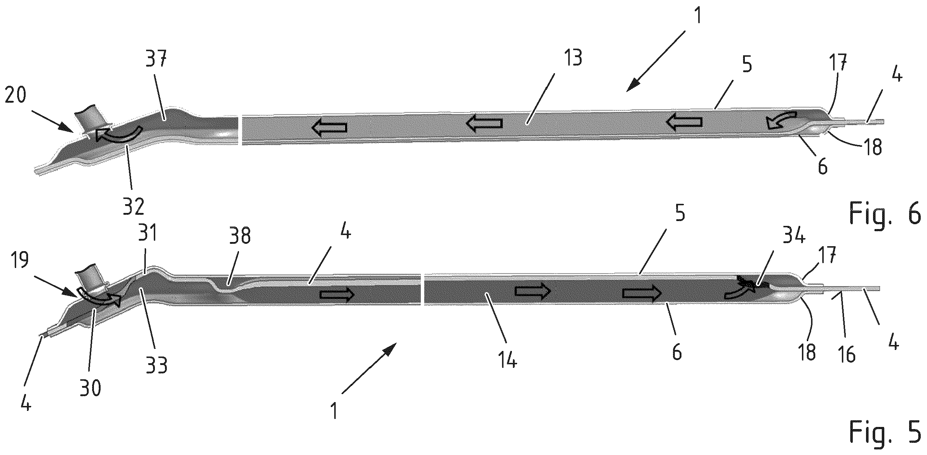

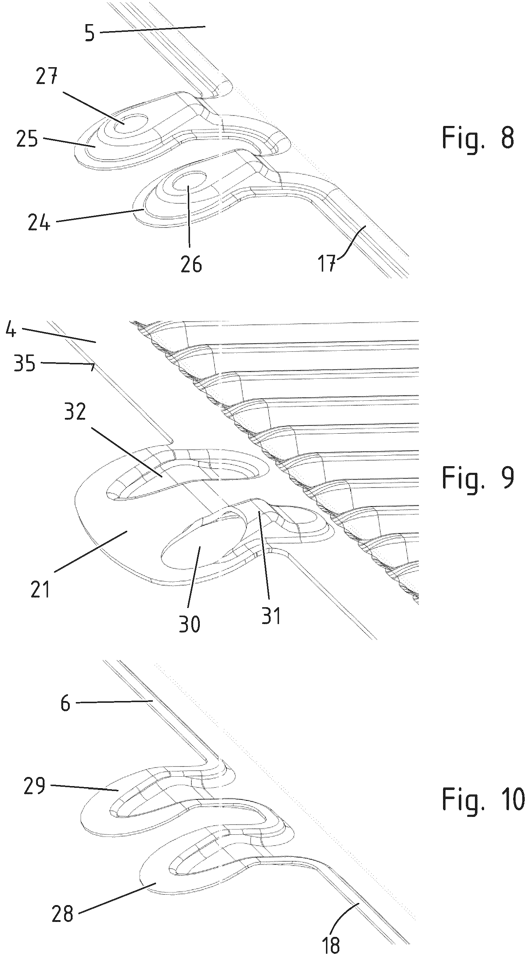

Die Figuren 5 und 6 zeigen die Strömungsführung innerhalb der Temperierplatte 1. Das Temperiermittel wird zunächst in die unteren Temperierkanäle 14 eingeleitet (Figur 5). Das sind die Kanäle, die sich an der Unterseite 16 der zentralen Tragplatte 4 befinden. Temperiermittelanschlüsse 19, 20 für den Zulauf und den Rücklauf sind an der oberen Abdeckplatte 5 angeordnet (Figur 2). Der Temperiermittelanschluss 19 kann auch als Einlauframpe bezeichnet werden, weil ein randseitig angeordneter Vorsprung 21, an welchem die Temperiermittelanschlüsse 19, 20 angeordnet sind, gegenüber der Mittelebene der Tragplatte 4 rampenartig abgekröpft ist. Dadurch ragen Anschlussstutzen 22, 23, die an der oberen Abdeckplatte 5 befestigt sind, nicht senkrecht nach oben, sondern schräg nach oben und weisen von den Zellebenen 2, 3 weg. Die obere Abdeckplatte 5 besitzt zu diesem Zweck Anschlussöffnungen 27, 28 (Figur 8), an denen die Anschlussstutzen 22, 23 befestigt sind. Die obere Abdeckplatte 5 besitzt hierzu zwei fingerartige Vorsprünge 24, 25, wie sie im Detail in der Figur 8 zu sehen sind. In diesen beiden Vorsprüngen 24, 25 befinden sich Anschlussöffnungen 26, 27 für die Anschlussstutzen 22 und 23. Die Figur 9 zeigt, dass der zentrale Vorsprung 21 der Tragplatte 4 nicht zweigeteilt ist, sondern das tragende Verbindungsglied zwischen den fingerartigen Vorsprüngen 24, 25 der oberen Tragplatte 5 ist. Die Figur 10 zeigt, dass auch die untere Tragplatte 6 zwei fingerartige Vorsprünge 28, 29 aufweist. In der Zusammenbauposition dient der einteilige Vorsprung 21 als Bindeglied für alle Vorsprünge 24, 25, 28, 29 der oberen und unteren Abdeckplatte 5, 6.

Damit das zuströmende Temperiermittel von der oberen Anschlussöffnung 26 auf die Unterseite der Tragplatte 4 gelangen kann, besitzt der Vorsprung 21 der Tragplatte 4 eine Verbindungsöffnung 30, die mit der Anschlussöffnung 26 verbunden ist. Zudem befinden sich in dem Vorsprung 21 der Tragplatte in entgegengesetzter Richtung orientierte Sicken 31, 32, um den Strömungsquerschnitt für das zuströmende und abströmende Temperiermittel zu vergrößern. Auch in den fingerartigen Vorsprüngen 24, 25 der oberen Abdeckplatte 5 bzw. den fingerartigen Vorsprüngen 28, 29 der unteren Abdeckplatte 6 befinden sich Sicken, um den notwendigen Querschnitt für die Fluidströmung bereit zu stellen. In der Zusammenbaulage bilden die drei Plattenbauteile einen Zuströmkanal 33 und einen Abströmkanal 37, wie er jeweils in den unterschiedlichen Schnittdarstellungen der Figur 5 und 6 dargestellt ist. Die Figur 5 zeigt in der Schnittebene durch den als Zulauf dienenden Temperiermittelanschluss 19, dass das Temperiermittel durch die Verbindungsöffnung 30 der Tragplatte 4 strömt und in den unteren Temperierkanal 14 geleitet wird. Der Temperierkanal 14 erstreckt sich bis zu einer Durchgangsöffnung 34. Der Temperiermittelzulauf 19 befindet sich an einem dritten Rand 35 der Temperierplatte 1. Eine Durchgangsöffnung 34 im Temperierkanal 14 ist benachbart zum gegenüberliegenden vierten Rand 36 angeordnet. Die Durchgangsöffnung 34 lenkt das Temperiermittel in die oberen Temperierkanäle 13. Der weitere Strömungsverlauf ist in Figur 6 zu sehen. Es strömt dort vom vierten Rand 36 wieder in Richtung zum dritten Rand 35 und über einen Abströmkanal 37 zwischen dem fingerartigen Vorsprung 25 oberhalb der Sicke 32 zu dem Temperiermittelanschluss 20, der als Ablauf dient. Aus der Schnittdarstellung der Figur 5 ist zu erkennen, dass quer zu den oberen und unteren Temperierkanälen 13, 14 verlaufend eine Sammelkammer 38 angeordnet ist, in welche alle oberen Temperierkanäle 14 münden, wobei die Sammelkammer 38 in der Nähe des dritten Randes 35 schließlich das Temperiermittel dem Ablaufkanal 37 zuführt.

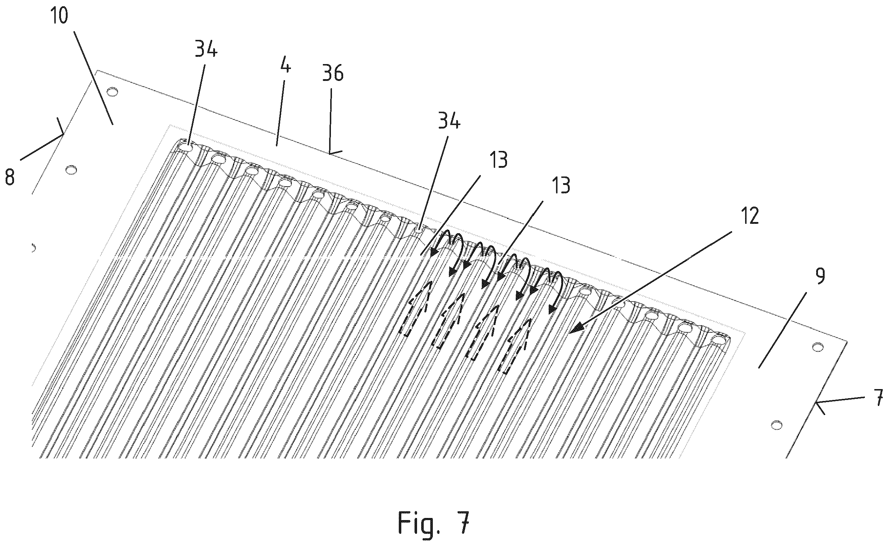

Das Temperiermittel hat daher unterschiedlich weite Wege innerhalb der Temperierplatte 1, bis es wieder zu dem Ablauf gelangt. Aus diesem Grund sind die Durchgangsöffnungen 34 unterschiedlich groß konfiguriert. Die Figur 7 zeigt die Strömung des Temperiermittels ober- und unterhalb der zentralen Tragplatte 4. Die gestrichelt eingezeichneten Pfeile verdeutlichen, dass das Temperierfluid auf der Unterseite entlang strömt. Alle trapezförmigen Temperierkanäle werden auf der Unterseite der Tragplatte 4 in dieselbe Richtung parallel durchströmt, und zwar vom dritten Rand 35 kommend hin zum vierten Rand 36 und parallel zu den beiden anderen Rändern 7, 8. Das Temperiermittel tritt durch die einzelnen Durchgangsöffnungen 34 aus den unteren Temperierkanälen 14 aus und strömt in die angrenzenden, oberseitig der Tragplatte 4 angeordneten Temperierkanäle 13 ein. Dabei wird der Temperiermittelstrom auf zwei benachbarte oberseitige Temperierkanäle 13 aufgeteilt. Das zeigen die beiden mit durchgezogener Linie eingezeichneten Pfeile, die aus jeder der Durchgangsöffnungen 34 herausführen.

Die Figur 7 zeigt ferner, dass die Durchgangsöffnungen unterschiedliche Durchmesser haben. Der Einfachheit halber werden alle Durchgangsöffnungen 34 mit demselben Bezugszeichen bezeichnet. Dennoch hat eine Durchgangsöffnung 34 benachbart dem ersten oder zweiten Rand 7, 8 einen wesentlich größeren Durchmesser als eine Durchgangsöffnung 34 im mittleren Bereich. Die dazwischen liegenden Durchgangsöffnungen 34 besitzen abgestufte Durchmesser und werden zur Mitte hin immer kleiner. Auf diese Weise kann eine Homogenisierung der Wärmeabfuhr erreicht werden. Die Strömungsgeschwindigkeiten in benachbarten Temperierkanälen 13, 14 sind stets unterschiedlich. Einander benachbarte Durchgangsöffnungen 34 haben unterschiedliche Durchmesser.

Je länger der Weg des Temperiermittels durch die Temperierplatte 1 ist, desto größer ist die Durchgangsöffnung 34. Je kürzer bzw. je direkter die Anströmung ist, desto kleiner ist der Querschnitt der Durchgangsöffnung 34.

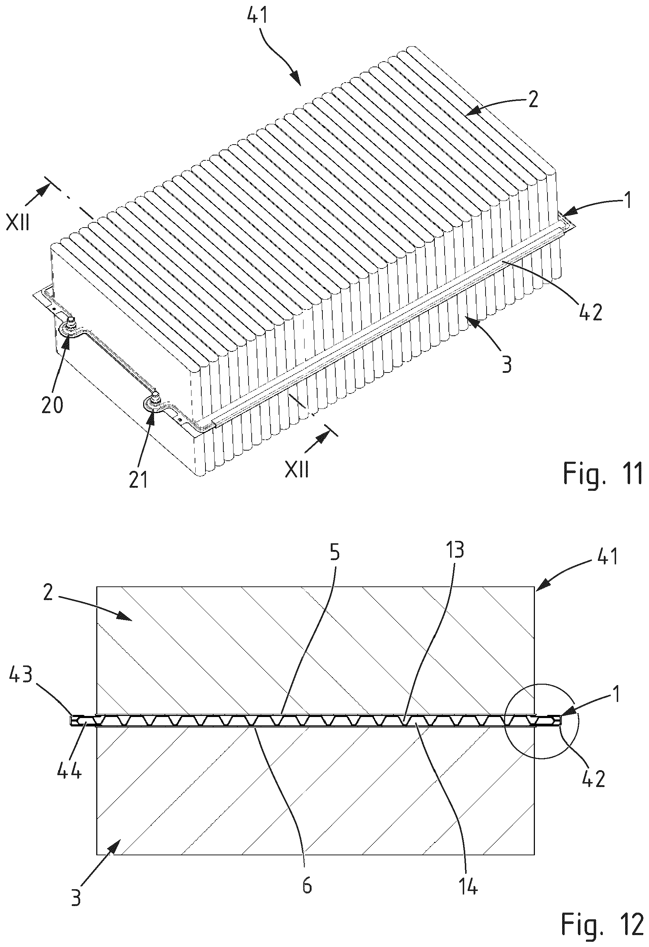

Die Figuren 11 bis 14 zeigen ein zweites Ausführungsbeispiel, das sich von dem ersten Ausführungsbeispiel hinsichtlich der Gestaltung der Temperierplatte unterscheidet. Zur Vermeidung von Wiederholungen wird hinsichtlich der Erläuterung der Funktion auf die vorangegangene Beschreibung Bezug genommen. Nachfolgend wird hauptsächlich auf die Unterschiede eingegangen, wobei für im Wesentlichen funktionsgleiche Komponenten die zu den Figuren 1 bis 10 eingeführten Bezugszeichen verwendet werden

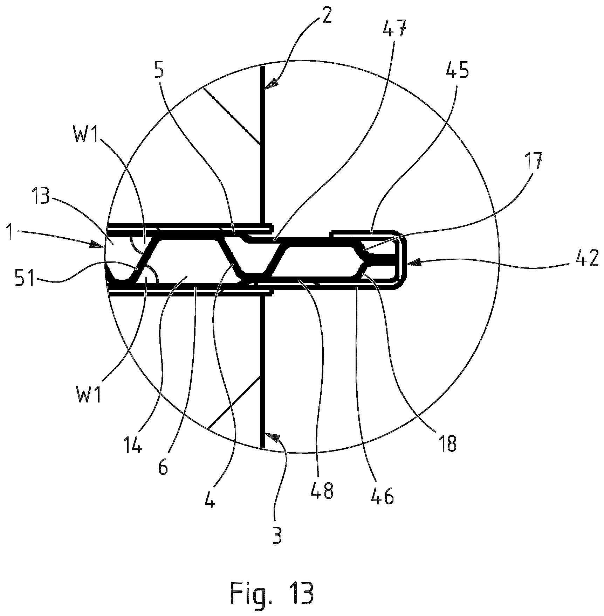

Die Figur 11 zeigt eine Batteriespeicheranordnung 41 mit den beiden Zellenebenen 2, 3 und einer Temperierplatte 1, die anstelle von Befestigungsrändern Verstärkungsleisten 42, 43 aufweist. Die Verstärkungsleisten 42, 43 sind Bauteile in Form von Klammern mit einem U-förmigen Querschnitt. Die Verstärkungsleisten 42, 43 umgreifen die oberen und unteren Abdeckplatten 5, 6 ober- und unterseitig. Die Abdeckplatte 4 steht seitlich im Bereich der Verstärkungsleisten 42, 43 nicht über die Kragen 17, 18 der Abdeckplatten 5, 6 vor. Dafür stehen die Abdeckplatten 5, 6 insgesamt etwas gegenüber den Zellelementen 2, 3 vor, so dass die Verstärkungsleisten 42, 43 nicht nur die Kragen 17, 18 übergreift, sondern auch einen randseitigen Temperierkanal 44. Die Verstärkungsleisten 42, 43 besitzen einen Rücken und zwei an den Rücken angeschlossene obere und untere Schenkel 45, 46, die parallel zueinander verlaufen und in Richtung zur Temperierplatte 1 weisen. Ein unterer Schenkel 45 ist länger als der obere Schenkel 46. Der untere Schenkel 45 greift zwischen die untere Zellenebene 3 und die untere Abdeckplatte 6. Der kürzere obere Schenkel 46 greift nicht unter die obere Zellenebene 2 und endet im Abstand von der Zellenebene 2. Die beiden Schenkel 45, 46 liegen auf entlang der Randseiten der oberen und der unteren Abdeckplatten 4, 5 verlaufenden Stufen 47, 48 auf. Im Bereich der streifenförmigen Stufen 47, 48 ist die Dicke der Temperierplatte 1 reduziert, so dass die Schenkel 45, 46 in Dickenrichtung nicht über die glatten Bereich 39, 40 vorstehen (Figur 13). Die Verstärkungsleisten 42, 43 sind daher nicht dicker als die Temperierplatte 1. Die Verstärkungsleisten 42, 43 sind ein unlösbarer Bestandteil der Temperierplatte 1.

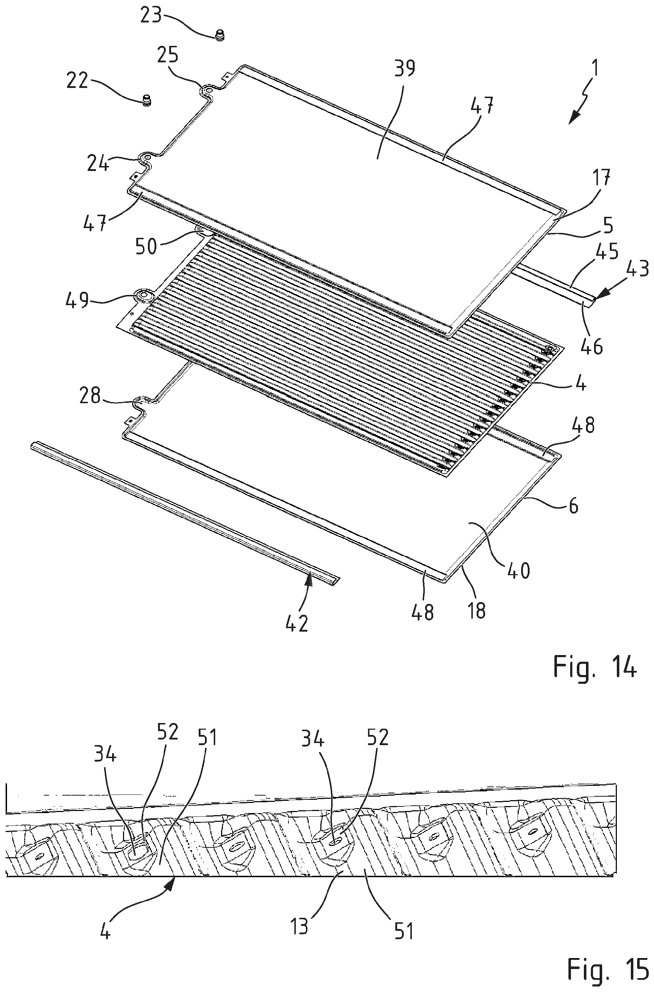

Ein weiterer Unterschied ist, dass die Temperiermittelanschlüsse 19, 20 in größerem Abstand zueinander angeordnet. Daher besitz die Tragplatte 4 zwei getrennte Vorsprünge 49, 50. Zudem zeigt die Figur 12, dass die Querschnitte der oberen und unteren Temperierkanäle 13, 14 unterschiedlich groß sind. In diesem Fall ist der Querschnitt der unteren Temperierkanäle 14 größer. Die Temperierkanäle 13, 14 sind trapezförmig. Die Wände 51 schließen mit den angrenzenden Abdeckplatten 5, 6 jeweils einen Innenwinkel W1 ein (Figur 13). Die Wände 51 sind lokal im Bereich der Durchströmöffnungen 34 weniger steil, d.h. abgeflacht, um die Durchströmöffungen 34 nach der Formgebung der Tagplatte 4 leichter herstellen zu können. Die Figur 15 zeigt, dass die Durchströmöffnungen 24 in eine Wandbereich 52 der Wände 51 angeordnet sind, der einen reduzierten Innenwinkel aufweist, d.h. der Wandbereich 52 ist flacher und steht nicht so steil zur Ebene der Tragplatte 4 wie die Wände 51.

### Bezugszeichen:

- 1 -: Temperierplatte
- 2 -: obere Zellebene
- 3 -: untere Zellebene
- 4 -: Tragplatte
- 5 -: obere Abdeckplatte
- 6 -: untere Abdeckplatte
- 7 -: erster Rand von 1
- 8 -: zweiter Rand von 1
- 9 -: Befestigungsrand
- 10 -: Befestigungsrand
- 11 -: Öffnung in 9, 10
- 12 -: Temperierkanalprofilierung
- 13 -: oberer Temperierkanal
- 14 -: unterer Temperierkanal
- 15 -: Oberseite von 4
- 16 -: Unterseite von 4
- 17 -: Kragen von 5
- 18 -: Kragen von 4
- 19 -: Temperiermittelanschluss (Zulauf)
- 20 -: Temperiermittelanschluss (Ablauf)
- 21 -: Vorsprung an 4 für 19, 20
- 22 -: Anschlussstutzen (Zulauf)
- 23 -: Anschlussstutzen (Ablauf)
- 24 -: fingerartiger Vorsprung an 5
- 25 -: fingerartiger Vorsprung an 5
- 26 -: Anschlussöffnung in 24
- 27 -: Anschlussöffnung in 25
- 28 -: fingerartiger Vorsprung an 6
- 29 -: fingerartiger Vorsprung an 6
- 30 -: Verbindungsöffnung in 4
- 31 -: Sicke
- 32 -: Sicke
- 33 -: Zuströmkanal in 28
- 34 -: Durchströmöffnung
- 35 -: dritter Rand von 1
- 36 -: vierter Rand von 1
- 37 -: Abströmkanal in 25
- 39 -: glatter Bereich von 5
- 40 -: glatter Bereich von 6
- 41 -: Batteriespeicheranordnung
- 42 -: Verstärkungsleiste
- 43 -: Verstärkungsleiste
- 44 -: Temperierkanal
- 45 -: Steg
- 46 -: Steg
- 47 -: Stufe
- 48 -: Stufe
- 49 -: Vorsprung
- 50 -: Vorsprung
- 51 -: Wand von 13, 14
- 52 -: Wandabschnitt

- W1 -: Innenwinkel

## Patentansprüche

1. Temperierplatte (1) mit folgenden Merkmalen:
1.1. Eine Tragplatte (1) ist zwischen einer glatten oberen Abdeckplatte (5) und einer glatten unteren Abdeckplatte (6) angeordnet und mit den beiden Abdeckplatten (5, 6) verbunden;
1.2. Die Tragplatte (4) ist zur Ausbildung von oberen und unteren Temperierkanälen (13, 14) zwischen der Tragplatte (4) und den angrenzenden Abdeckplatten (5, 6) mit einer Temperierkanalprofilierung (12) versehen, wobei die oberen Temperierkanäle (13) zwischen der oberen Abdeckplatte (5) und der Tragplatte (4) verlaufen und die unteren Temperierkanäle (14) zwischen der unteren Abdeckplatte (6) und der Tragplatte (4) verlaufen;
1.3. Die Tragplatte (4) weist Durchgangsöffnungen (34) auf, um die obere und die unteren Temperierkanäle (13, 14) zur Temperiermittelumlenkung miteinander zu verbinden; **dadurch gekennzeichnet, dass**:
1.4. Die Durchgangsöffnungen (34) haben voneinander abweichende Durchmesser, abhängig von der Länge des Wegs des Temperiermittels von einem Temperiermittelanschluss (19) zu der Durchgangsöffnung (34), wobei der Durchmesser größer ist, wenn der Weg länger ist.

2. Temperierplatte (1) nach Anspruch 1, **dadurch gekennzeichnet, dass** die Abdeckplatten (5, 6) angrenzend an die oberen und unteren Temperierkanäle (13, 14) jeweils einen glatten Bereich (39, 40) aufweisen und an den glatten Bereichen (39, 40) jeweils einen randseitigen Kragen (17, 18) zur Verbindung mit der Tragplatte (4) aufweisen, wobei die Kragen (17, 18) und die glatten Bereiche (39, 40) hinsichtlich der Formgebung identisch ausgebildet sind.

3. Temperierplatte (1) nach Anspruch 1 oder 2, **dadurch gekennzeichnet, dass** sie gegenüberliegende erste und zweite Randseiten (7, 8) aufweist, an denen jeweils eine Verstärkungsleiste (42, 43) angeordnet ist.

4. Temperierplatte (1) nach Anspruch 4, **dadurch gekennzeichnet, dass** die Verstärkungsleiste (42, 43) eine Klammer ist, welche die obere und die untere Abdeckplatte (5, 6) übergreift.

5. Temperierplatte (1) nach Anspruch 3 oder 4, **dadurch gekennzeichnet, dass** die Verstärkungsleiste (42, 43) Öffnungen zu Befestigung der Temperierplatte (1) an einem Gehäuse, insbesondere an einem Batteriegehäuse aufweist.

6. Temperierplatte (1) nach einem der Ansprüche 1 bis 5, **dadurch gekennzeichnet, dass** sie gegenüberliegende erste und zweite Randseiten (7, 8) aufweist, wobei die Tragplatte (4) einen gegenüber den Abdeckplatten (5, 6) vorstehenden Befestigungsrand (9, 10) aufweist.

7. Temperierplatte (1) nach Anspruch 6, **dadurch gekennzeichnet, dass** der Befestigungsrand (9, 10) Öffnungen (11) zur Befestigung der Temperierplatte (1), insbesondere an einem Batteriegehäuse aufweist.

8. Temperierplatte (1) nach einem der Ansprüche 1 bis 7, **dadurch gekennzeichnet, dass** Tragplatte (4) rechteckig ist und an einer dritten Randseite (35) wenigstens einen Vorsprung (21, 49, 50) für einen Temperiermittelanschluss (19, 20) an einer der Abdeckplatten (5) aufweist.

9. Temperierplatte (1) nach Anspruch 8, **dadurch gekennzeichnet, dass** der wenigstens ein Vorsprung (21, 49, 50) in einem Winkel in einem Bereich von 5 bis 45° zur Tragplatte (4) geneigt ist.

10. Temperierplatte (1) nach Anspruch 8 oder 9, **dadurch gekennzeichnet, dass** die Durchgangsöffnungen (34) zur Temperiermittelumlenkung benachbart zu einer vierten Randseite (36) angeordnet sind, die der dritten Randseite (35) gegenüberliegt.

11. Temperierplatte (1) nach einem der Ansprüche 1 bis 10, **dadurch gekennzeichnet, dass** die Temperierkanäle (13, 14) im Querschnitt trapezförmig sind und jeweils zwischen der oberen Abdeckplatte (5) und der unteren Abdeckplatte (6) verlaufende Wände (51) aufweisen, die von der Tragplatte (4) gebildet werden, wobei die Wände (51) eines Temperierkanals (13, 14) einen Innenwinkel (W1) mit derjenigen Abdeckplatte (5, 6) einschließen, die den Temperierkanal (13, 14) bedeckt, wobei die Durchströmöffnungen (34) in einem Wandbereich (52) angeordnet sind, in welchem der Innenwinkel (W1) reduziert ist.

12. Temperierplatte (1) nach einem der Ansprüche 4 bis 8, **dadurch gekennzeichnet, dass** der Temperiermittelanschluss (19) für den Zulauf an der oberen Abdeckplatte (5) angeordnet ist, wobei die Tragplatte (4) eine Verbindungsöffnung (30) aufweist, die mit einem Zuströmkanal (33) zu den unteren Temperierkanälen (13) verbunden ist und wobei der Temperiermittelanschluss (20) für den Ablauf an die obere Abdeckplatte (5) angeschlossen ist und mit einem Abströmkanal (37) verbunden ist, der an die oberen Temperierkanäle (13) angeschlossen ist.

13. Temperierplatte (1) nach Anspruch 12, **dadurch gekennzeichnet, dass** die Tragplatte (4) im Bereich des Zuströmkanals (33) und des Abströmkanals (37) den jeweiligen Strömungsquerschnitt vergrößernde Sicken (31, 32) aufweist.

14. Batteriespeicheranordnung (41) umfassend eine aus einer Vielzahl von Batteriezellen gebildeten oberen Zellebene (2) und einer aus einer Vielzahl von Batteriezellen gebildeten unteren Zellebene (3), wobei zwischen den Zellebenen (2, 3) eine Temperierplatte (1) mit den Merkmalen nach einem der Ansprüche 1 bis 13 angeordnet ist.

15. Batteriespeicheranordnung (41) nach Anspruch 14, mit einem Batteriegehäuse, wobei die Temperierplatte (1) gegenüberliegende erste und zweite Randseiten (7, 8) aufweist, an denen jeweils eine Verstärkungsleiste (42, 43) angeordnet ist und/oder wobei die Tragplatte (4) einen Befestigungsrand (9,10) aufweist, wobei die Temperierplatte (1) mittels der Verstärkungsleisten (42, 43) und/oder mittels der Befestigungsränder (9, 10) an oder in dem Batteriegehäuse befestigt ist.

## Claims

1. A temperature-control plate (1), having the following features:
1.1. a support plate (1) is arranged between a smooth upper cover plate (5) and a smooth lower cover plate (6) and is connected to the two cover plates (5, 6);
1.2. the support plate (4) is provided with a temperature-control channel profile (12) to form upper and lower temperature-control channels (13, 14) between the support plate (4) and the adjacent cover plates (5, 6), wherein the upper temperature-control channels (13) run between the upper cover plate (5) and the support plate (4) and the lower temperature-control channels (14) run between the lower cover plate (6) and the support plate (4);
1.3. the support plate (4) has through openings (34) in order to connect the upper and lower temperature-control channels (13, 14) to one another for the temperature-control medium redirection; **characterised in that**:
1.4. the through openings (34) have different diameters, depending on the length of the path of the temperature-control medium from a temperature-control medium connection (19) to the through opening (34), wherein the diameter is larger if the path is longer.

2. The temperature-control plate (1) according to claim 1, **characterised in that** the cover plates (5, 6) each have a smooth area (39, 40) adjacent to the upper and lower temperature-control channels (13, 14) and each have an edge-side collar (17, 18) on the smooth areas (39, 40) for connection to the support plate (4), wherein the collars (17, 18) and the smooth areas (39, 40) are identical in terms of shape.

3. The temperature-control plate (1) according to claim 1 or 2, **characterised in that** it has opposite first and second edge sides (7, 8), on each of which a reinforcing strip (42, 43) is arranged.

4. The temperature-control plate (1) according to claim 4, **characterised in that** the reinforcing strip (42, 43) is a clamp which engages over the upper and lower cover plates (5, 6).

5. The temperature-control plate (1) according to claim 3 or 4, **characterised in that** the reinforcing strip (42, 43) has openings for fastening the temperature-control plate (1) to a housing, in particular to a battery housing.

6. The temperature-control plate (1) according to any one of claims 1 to 5, **characterised in that** it has opposite first and second edge sides (7, 8), wherein the support plate (4) has a fastening edge (9, 10) that projects relative to the cover plates (5, 6).

7. The temperature-control plate (1) according to claim 6, **characterised in that** the fastening edge (9, 10) has openings (11) for fastening the temperature-control plate (1), in particular to a battery housing.

8. The temperature-control plate (1) according to any one of claims 1 to 7, **characterised in that** the support plate (4) is rectangular and has at least one projection (21, 49, 50) on a third edge side (35) for a temperature-control medium connection (19, 20) on one of the cover plates (5).

9. The temperature-control plate (1) according to claim 8, **characterised in that** the at least one projection (21, 49, 50) is inclined at an angle in a range of 5 to 45° to the support plate (4).

10. The temperature-control plate (1) according to claim 8 or 9, **characterised in that** the through openings (34) for temperature-control medium deflection are arranged adjacent to a fourth edge side (36) which is opposite the third edge side (35).

11. The temperature-control plate (1) according to any one of claims 1 to 10, **characterised in that** the temperature-control channels (13, 14) are trapezoidal in cross section and each have walls (51), running between the upper cover plate (5) and the lower cover plate (6), which are formed by the support plate (4), wherein the walls (51) of a temperature-control channel (13, 14) enclose an internal angle (W1) with the cover plate (5, 6) which covers the temperature-control channel (13, 14), wherein the through openings (34) are arranged in a wall region (52) in which the internal angle (W1) is reduced.

12. The temperature-control plate (1) according to any one of claims 4 to 8, **characterised in that** the temperature-control medium connection (19) for the inlet is arranged on the upper cover plate (5), wherein the support plate (4) has a connection opening (30), which is connected to an inflow channel (33) to the lower temperature-control channels (13) and wherein the temperature-control medium connection (20) for the drain is connected to the upper cover plate (5) and is connected to an outflow channel (37) which is connected to the upper temperature-control channels (13).

13. The temperature-control plate (1) according to claim 12, **characterised in that** the support plate (4) in the area of the inflow channel (33) and the outflow channel (37) has beads (31, 32) which increase the respective flow cross section.

14. A battery storage arrangement (41), comprising an upper cell level (2), formed from a plurality of battery cells, and a lower cell level (3), formed from a plurality of battery cells, wherein a temperature-control plate (1) with the features according to any one of claims 1 to 13 is arranged between the celllevels (2, 3).

15. The battery storage arrangement (41) according to claim 14, with a battery housing, wherein the temperature-control plate (1) has opposite first and second edge sides (7, 8), on each of which a reinforcing strip (42, 43) is arranged and/or wherein the support plate (4) has a fastening edge (9, 10), wherein the temperature-control plate (1) is fastened to or in the battery housing by means of the reinforcing strips (42, 43) and/or by means of the fastening edges (9, 10).

## Revendications

1. Plaque (1) de régulation de température présentant les caractéristiques suivantes :
1.1. une plaque (1) de support est disposée entre une plaque de recouvrement supérieure (5) lisse et une plaque de recouvrement inférieure (6) lisse et reliée aux deux plaques de recouvrement (5, 6) ;
1.2. la plaque de support (4) est pourvue d'un profilage de canal de régulation de température (12) pour la formation de canaux de régulation de température supérieurs et inférieurs (13, 14) entre la plaque de support (4) et les plaques de recouvrement (5, 6) adjacentes, dans laquelle les canaux de régulation de température supérieurs (13) passent entre la plaque de recouvrement supérieure (5) et la plaque de support (4) et les canaux de régulation de température inférieurs (14) passent entre la plaque de recouvrement inférieure (6) et la plaque de support (4) ;
1.3. la plaque de support (4) présente des ouvertures de passage (34) pour relier entre eux les canaux de régulation de température supérieurs et inférieurs (13, 14) pour le renvoi du produit de régulation de température ; **caractérisée en ce que** :
1.4. les ouvertures de passage (34) présentent des diamètres différents les uns des autres, en fonction de la longueur du trajet du produit de régulation de température d'un raccord de produit de régulation de température (19) à l'ouverture de passage (34), dans laquelle le diamètre est plus grand lorsque le trajet est plus long.

2. Plaque (1) de régulation de température selon la revendication 1, **caractérisée en ce que** les plaques de recouvrement (5, 6) présentent respectivement une zone lisse (39, 40) adjacente aux canaux de régulation de température supérieurs et inférieurs (13, 14) et présentent respectivement un collet (17, 18) côté bord pour la liaison avec la plaque de support (4) au niveau des zones lisses (39, 40), dans laquelle les collets (17, 18) et les zones lisses (39, 40) sont configurés de manière identique en ce qui concerne leur forage.

3. Plaque (1) de régulation de température selon la revendication 1 ou 2, **caractérisée en ce qu'**elle présente des premier et deuxième côtés de bord (7, 8) opposés, au niveau desquels est disposée respectivement une barre de renfort (42, 43).

4. Plaque (1) de régulation de température selon la revendication 4, **caractérisée en ce que** la barre de renfort (42, 43) est une agrafe qui dépasse les plaques de recouvrement supérieure et inférieure (5, 6).

5. Plaque (1) de régulation de température selon la revendication 3 ou 4, **caractérisée en ce que** la barre de renfort (42, 43) présente des ouvertures de fixation de la plaque (1) de régulation de température au niveau d'un boîtier, en particulier au niveau d'un boîtier de batterie.

6. Plaque (1) de régulation de température selon l'une quelconque des revendications 1 à 5, **caractérisée en ce qu'**elle présente des premiers et deuxièmes côtés de bord (7, 8) opposés, dans laquelle la plaque de support (4) présente un bord de fixation (9, 10) faisant saillie par rapport aux plaques de recouvrement (5, 6).

7. Plaque (1) de régulation de température selon la revendication 6, **caractérisée en ce que** le bord de fixation (9, 10) présente des ouvertures (11) pour la fixation de la plaque (1) de régulation de température, en particulier au niveau d'un boîtier de batterie.

8. Plaque (1) de régulation de température selon l'une quelconque des revendications 1 à 7, **caractérisée en ce que** la plaque de support (4) est rectangulaire et présente au niveau d'un troisième côté de bord (35) au moins une saillie (21, 49, 50) pour un raccord de produit de régulation de température (19, 20) à l'une des plaques de recouvrement (5).

9. Plaque (1) de régulation de température selon la revendication 8, **caractérisée en ce que** l'au moins une saillie (21, 49, 50) est inclinée selon un angle dans une plage de 5 à 45° par rapport à la plaque de support (4).

10. Plaque (1) de régulation de température selon la revendication 8 ou 9, **caractérisée en ce que** les ouvertures de passage (34) pour le renvoi du produit de régulation de température sont disposées à proximité d'un quatrième côté de bord (36) qui est opposé au troisième côté de bord (35).

11. Plaque (1) de régulation de température selon l'une quelconque des revendications 1 à 10, **caractérisée en ce que** les canaux de régulation de température (13, 14) sont de forme trapézoïdale en section et présentent respectivement des parois (51) s'étendant entre la plaque de recouvrement supérieure (5) et la plaque de recouvrement inférieure (6), qui sont formées par la plaque de support (4), dans laquelle les parois (51) d'un canal de régulation de température (13, 14) incluent un angle intérieur (W1) avec la plaque de recouvrement (5, 6), qui recouvre le canal de régulation de température (13, 14), dans laquelle les ouvertures de passage (34) sont disposées dans une zone de paroi (52) dans laquelle l'angle intérieur (W1) est réduit.

12. Plaque (1) de régulation de température selon l'une quelconque des revendications 4 à 8, **caractérisée en ce que** le raccord de produit de régulation de température (19) pour l'arrivée est disposé au niveau de la plaque de recouvrement supérieure (5), dans laquelle la plaque de support (4) présente une ouverture de liaison (30), qui est reliée à un canal d'arrivée (33) vers les canaux de régulation de température inférieurs (13) et dans laquelle le raccord de produit de régulation de température (20) pour l'écoulement est raccordé à la plaque de recouvrement supérieure (5) et est relié à un canal d'écoulement (37) qui est raccordé aux canaux de régulation de température supérieurs (13).

13. Plaque (1) de régulation de température selon la revendication 12, **caractérisée en ce que** la plaque de support (4) présente des moulures (31, 32) agrandissant la section d'écoulement respective dans la zone du canal d'arrivée (33) et du canal d'écoulement (37).

14. Ensemble de stockage de batterie (41) comprenant un niveau de cellule supérieur (2) formé d'une pluralité de cellules de batterie et un niveau de cellule inférieur (3) formé d'une pluralité de cellules de batterie, dans lequel une plaque (1) de régulation de température présentant les caractéristiques selon l'une quelconque des revendications 1 à 13 est disposée entre les niveaux de cellules (2, 3).

15. Ensemble de stockage de batterie (41) selon la revendication 14, avec un boîtier de batterie, dans lequel la plaque (1) de régulation de température présente des premier et deuxième côtés de bord (7, 8) opposés, au niveau desquels est disposée respectivement une barre de renfort (42, 43) et/ou dans lequel la plaque de support (4) présente un bord de fixation (9, 10), dans lequel la plaque (1) de régulation de température est fixée au ou dans le boîtier de batterie au moyen des barres de renfort (42, 43) et/ou au moyen des bords de fixation (9, 10).
